# EUROPEAN PATENT APPLICATION

(11) **EP 4 231 118 A1**
(43) Date of publication of application: **23.08.2023**
(21) Application number: 22157210.0
(22) Date of filing: 17.02.2022
(51) Int. Cl.: G06F 1/18, G06F 11/00, H04L 69/00, H04L 12/40

(54) **DATA ENCODING AND DECODING**

(71) Applicant: Thales Alenia Space UK Ltd, Reading RG2 6GF (GB); The University of York, Heslington York YO10 5DD (GB)
(72) Inventor: WALSHE, Michael, Bristol, BS16 1EJ (GB); ROWLINGS, Matthew, Heslington, York, Y010 5DD (GB); TREFZER, Martin, Heslington, York, YO10 5DD (GB); POST, Mark, Heslington, York, Y010 5DD (GB); PERRYMAN, Philip, Bristol, BS16 1EJ (GB); PURNELL, Joseph, Bristol, BS16 1EJ (GB); WATSON, Stephen, Bristol, BS16 1EJ (GB)
(74) Representative: Atout PI Laplace

(57) **Abstract**

A codec for transmission of data over a twisted pair Ethernet compatible Physical Layer is provided in which sub-packets intended for transmission are buffered for transmission in a sequence based on a priority determined based on quality of service requirements associated with each sub-packet, where the priority is updated at the encoder based on control tokens returned by the end point. These control tokens may provide CRC information, acknowledgement signals, and the like, generated by the end point decoder. This may allow for improved compliance with quality criteria by reprioritising underperforming communication channels, resending lost packets

## Description

### FIELD OF THE INVENTION

The present invention relates to electrically wired data communications, and in particular on-board and EGSE communication links in spacecraft.

### BACKGROUND PRIOR ART

In order to provide a high level of tolerance to fault propagation and noise susceptibility, spacecraft electronics sub-assemblies are typically electrically isolated from each other.

Spacecraft have traditionally implemented the MIL-STD-1553 standard for command and control of sub-assemblies. MIL-STD-1553 is magnetically coupled and provides a very high level of common mode electrical isolation and protection from fault propagation. The main drawback of MIL-STD-1553 is its low data rate which is constrained to 1 Mbits/s.

Most modern spacecraft require much higher data rates for their payloads. The SpaceWire standard has been developed and widely adopted to satisfy the need for these higher data requirements.

The LVDS standard that SpaceWire is based on requires the 0V reference at both ends of the link to be maintained within 1V of each other. This common 0V reference between two sub-assemblies is susceptible to transient effects. These transients can be caused by switching loads, spacecraft charging effects and high energy particles. Ground loops caused by the shared 0V reference can also make the link more susceptible to noise pickup.

The SpaceWire standard only allows the LVDS 0V reference to be maintained by the chassis connection between the sub-assemblies. This is to ensure that any fault currents flow through the chassis connection only which has a much higher current rating.

The bonding point between 0V and chassis is implemented uniquely on each sub-assembly. It is therefore difficult to predict the susceptibility to noise of a link as it will vary between units. Guidelines on selection of LVDS buffer and protection against power supply faults have been developed to mitigate the problems associated with SpaceWire.

One widely adopted solution has been to partition the spacecraft's on-board data network and use MIL-STD-1553 for critical device control and status data (TM/TC) and SpaceWire for less critical mission payload data.

Instruments and other data handling devices (e.g. MMUs, data processing units) then require both a SpaceWire and a MIL-STD-1553 interface. Both of these interfaces will need redundancy and so there is significant design overhead, electrical power overhead and connector and cable mass overhead that would not be required if a single type of interface could be relied on to provide both critical TMTC and payload data interfaces.

Due to the increased size, mass and power of a dual MIL-STD-1553 and SpaceWire network, some spacecraft implement a SpaceWire only interface for TM/TC and data. The widespread adoption of SpaceWire is therefore compounding the problem and reducing reliability and availability of spacecraft sub-assemblies.

Other electrical standards such as CAN bus and RS422 also compromise electrical isolation, but have a higher level of tolerance to common-mode offset voltage between sub-assemblies. However, these standards are not capable of achieving the high data rates of SpaceWire.

SpaceFibre is a new standard, compatible with SpaceWire at the packet level, that has been developed to addresses these issues. SpaceFibre supports a CML electrical standard as well as a fibre-optic standard for the link. SpaceFibre also adds QoS mechanisms to allow real-time traffic to share the same link as best-effort traffic, supporting traffic profiles for bandwidth reservation, timeslots and priority on a virtual-channel basis. One implementation concept is that the CML electrical standard can be used within a sub-assembly for high data rate communications and the fibre-optic standard can be used between sub-assemblies, providing full electrical isolation.

However, the AC coupling does not provide immunity to high-speed transients which can corrupt data and permanently damage the SpaceFibre interface SERDES with only a few volts. The AC coupling and high-data rate of SpaceFibre (>1 Gbps) also limits the length of a SpaceFibre copper cable to 5m, limiting its application in areas such as space launch systems which require much longer cable lengths.

The fibre optic physical layer of SpaceFibre provides full sub-assembly isolation and allows long cable lengths, but the required connecters are bulky, expensive and the fibre must be handled and integrated carefully. The optical fibre solution for SpaceFibre has been slow to be adopted due to difficulty in qualifying components, materials and processes for this new to Space optical interconnect.

Time Triggered Ethernet is widely used in aerospace applications such as fly-by-wire systems. This technology offers an enhanced full Ethernet stack with extensions for guaranteed delivery of time critical data. However, supporting the full Ethernet stack results in lots of extra features available that are not applicable to spacecraft avionics and as a consequence the TTTech avionic solution requires its own ASIC per interface as well as the physical layer PHYs and magnetics that provide the electrical isolation. The power consumption for the ASIC is significant and is many times more the SpaceFibre FPGA IP core which can be combined as part of a System-on-Chip within the same FPGA.

Although introduced in the context of space based communications systems, it will be recognized that similar considerations are applicable in many other contexts, such as aircraft, vehicle and terrestrial communications.

In view of the forgoing, a solution permitting full electrical isolation between communication interfaces while providing enhanced fault propagation is required.

### SUMMARY OF THE INVENTION

In accordance with the present invention in a first aspect there is provided a method for encoding data at an encoder on a twisted pair Ethernet compatible Physical Layer via an interface comprising an output buffer for transmission to an end point. This method comprises the steps of receiving link parameter data from the physical layer; receiving user application data from one or more user applications; receiving a frame reception status control token from the end point and receiving further control tokens supporting out of channel communications between the encoder and the end point. The user application data is associated with a quality of service requirement. The method of the first aspect further comprises assessing the link parameter data with the frame reception status to prioritize elements of the user data, translating the user application data into transmission frames compliant with the Physical Layer on the basis of the prioritization, writing the translated user application data together with associated the control tokens to the buffer with a programmed transmission sequence reflecting the prioritisation, and retrieving data and control tokens from the buffer for transmission in order of the programmed transmission sequence.

In a development of the first aspect, the control tokens reflecting current operational status indicate one or more of an indication that a connection with the end point is active, an indication that a connection with the end point is inactive, an indication that a connection with the end point is in a standby condition, or an indication of an error rate or error rate category to which a connection with the end point is active subject.

In a development of the first aspect, the step of translating comprises segmenting the user application data into sub-packets; defining quality data encoding the quality of service requirements; forming a frame structure compliant with the Physical Layer comprising one or more sub-packets and quality data.

In a development of the first aspect, the frame reception status control token indicates that a particular the element has not been correctly received by the end point, the step of assessing comprising prioritizing the particular element over other the elements of the user application data.

In a development of the first aspect, the frame reception status control token indicates that a particular the element has been correctly received by the end point, the method comprising a further step of deleting a the correctly received element from memory.

In a development of the first aspect, one or more control tokens define a power request or a power offer.

In a development of the first aspect, the step of translating the user application data may comprise calculating the frame CRC and adding the CRC value at the end of the transmitted data frame.

In accordance with the present invention in a second aspect there is provided an encoder for encoding data on a twisted pair Ethernet compatible Physical Layer, comprising an output buffer for transmission to an end point, the encoder being adapted to receive link parameter data from the physical layer; receive user application data from one or more user applications; receive frame reception status data from the end point; and receive control tokens supporting out of channel communications between the encoder and the end point. The user application data being associated with a quality of service requirement. The encoder of the second aspect is further adapted to assess the link parameter data with the frame reception status to prioritize elements of the user data, translate the user application data into a format compliant with the Physical Layer, write the translated user application data to the buffer reflecting the prioritization, write the control tokens together with associated the control tokens to the buffer reflecting current operational status, and to retrieve data and control tokens from the buffer for transmission in order of priority.

In accordance with the present invention in a third aspect there is provided a method for decoding data at an end point received over a twisted pair Ethernet compatible Physical Layer from an encoding network interface, comprising receiving a data frame on the physical layer, extracting user application data and associated control tokens from the data frame, decoding user quality of service information encoded within the data frame, decoding the control tokens and changing a mode of operation of the decoder reactive to a the control token or transferring the control token to a respective application, calculating and checking CRC code of the data frame and creating a control token reporting frame reception status based on the CRC check to and transmitting the reception status control token to the encoder.

In accordance with a development of the third aspect the method comprises a further step of responding to a power request or power offer using the control tokens.

In accordance with the present invention in a fourth aspect there is provided a decoder for decoding data at an end point received over a twisted pair Ethernet compatible Physical Layer from an encoding network interface, the encoder being adapted to: receive a data frame on the physical layer, extract user application data and associated control tokens from the data frame, decode user quality of service information encoded within the data frame, decode the control tokens and change a mode of operation of the decoder reactive to a control token or transfer said control token to a respective application, calculate a CRC code of the data frame; and create a control token reporting frame reception status based on the CRC code and transmit the reception status control token to the encoder.

In accordance with the present invention in a fifth aspect there is provided a computer program comprising instructions which, when the program is executed by a computer, cause the computer to carry out the method of the first or third aspect.

In accordance with the present invention in a fifth aspect there is provided a computer-readable medium comprising instructions which, when executed by a computer, cause the computer to carry out the method of the first or third aspect.

### BRIEF DESCRIPTION OF THE DRAWINGS

The invention will be better understood and its various features and advantages will emerge from the following description of a number of exemplary embodiments provided for illustration purposes only and its appended figures in which:
- Figure 1: represents a communications channel comprising an encoder and decoder in accordance with respective embodiments;
- Figure 2: shows a process in accordance with certain embodiments;
- Figure 3: shows a process in accordance with certain embodiments;
- Figure 4: shows a functional representation of a complete codec in accordance with an embodiment;
- Figure 5: shows an example of an embodiment being used in a spacecraft avionics application, showing interoperability with third interfaces; and
- Figure 6: shows a generic computing system suitable for implementation of embodiments of the invention.

### DETAILED DESCRIPTION OF THE INVENTION

As described herein, there are provided embodiments the transfer of data on a twisted pair Ethernet compatible Physical Layer via an interface comprising an output buffer for transmission to an end point.

As known to the skilled person, in the seven-layer OSI model of computer networking, the physical layer is the lowest layer in the model, which is most closely associated with the physical connection between devices. The physical layer defines the means of transmitting a stream of raw bits over a physical data link connecting network nodes. The bitstream may be grouped into code words or symbols and converted to a physical signal that is transmitted over a transmission medium. The physical layer provides an electrical, mechanical, and procedural interface to the transmission medium. The shapes and properties of the electrical connectors, the frequencies to broadcast on, the line code to use and similar low-level parameters, are specified by the physical layer.

A number of twisted pair Ethernet compatible standards are known, including IEEE 802.3e (1BASE5), 802.3i (10BASE-T), 802.3iu (100BASE-TX), 802.3iy (100BASE-T2), 802.3ab (1000Base-T), 802.3an (10GBASE-T), 802.3bq (25GBASE-T, 40GBASE-T), and their numerous variants and developments. Embodiments as described herein are applicable to any of these technologies. Furthermore, future standards developed from these technologies are also applicable, so that any standard of the IEEE 802.3 working group with backwards compatibility to any of the abovementioned technologies, and intended for transmission over twisted pairs of conductions (as indicated by the -T suffix) is also applicable. Furthermore, other technologies may be envisaged which do not fully comply with any of the above listed technologies, but which nevertheless are compatible with the physical layer of any of the abovementioned standards, and are therefore also covered by embodiments presented herein.

The adoption of the Ethernet Physical layer brings certain benefits, including electrical isolation through the use of magnetics. Magnetically isolated communication links are prevalent across many high-dependency terrestrial settings in the form of 10/100/1000BASE-T Ethernet. It is now a well-established terrestrial standard that has been designed specifically for operating in electrically noisy environments with cabling and the magnetic coupling provides an electrical isolation of over 1000V (as opposed to 1V for SpaceWire) resulting in minimal fault propagation between equipment.

The magnetic isolation and Ethernet PHY technology brings certain inherent advantages to on-board networks:
*1. Cable length:*
   The on-board communication network will be able to support cable lengths of up to 100m, allowing easier integration into larger spacecraft, easier integration with EGSE and new application areas such as space launch systems.
*2. Power delivery:*
   The on-board communication network will be able to power network devices (e.g. star trackers, sensors, small instruments) by delivering the power over the same cable as the communication. This removes the need for separate power cables, significantly reducing spacecraft mass.
3. *Time synchronisation:*
   The on-board communication network will be able to support a highly-accurate time synchronisation service to instruments. This removes the need for dedicated PPS cables, reducing spacecraft mass.
4. *Ethernet Compatibility:*
   The on-board communication network will be electrically compatible with terrestrial Ethernet networking equipment, allowing easier integration and development of EGSE test equipment and processes.

Meanwhile, the Ethernet protocol stack providing communication over these physical links has been developed over a period of decades and supports a huge amount of interoperability between different types of computing systems (e.g. between PCs, phone handsets, internet infrastructure, industrial machinery) of different technology eras. This has resulted in an inefficient protocol stack, most of which is implemented in software, making its use in spaceflight limited due to the extra power, development time and complex testing and verification for Ethernet based avionics for space.

Embodiments replace the Ethernet MAC and Ethernet protocol stack, providing a framing service that manages data into and out of the PHY.

As known to the skilled person, the Ethernet medium access control (MAC) sublayer is the layer that controls the hardware responsible for interaction with the wired, optical or wireless transmission medium. The MAC sublayer and the logical link control (LLC) sublayer together make up the data link layer as defined in the OSI model. Within the data link layer, the LLC provides flow control and multiplexing for the logical link, while the MAC provides flow control and multiplexing for the transmission medium.

The framing service of embodiments presented herein may guarantee reliable data transfer through the use of error detection, data retransmission on error and providing support at the link layer, which may be seen as part of the MAC layer, for quality of service primitives (priority based and time sensitive based retry).

Accordingly, the replacement of the Ethernet MAC layer in accordance with embodiments as described below removes the large processing and data transfer overheads that this layer otherwise implies.

Approaches for providing deterministic communication over Ethernet might otherwise target the OSI layers above the Ethernet MAC. This would imply software control and introduces inefficiencies as the data is repackaged into frames at each OSI layer.

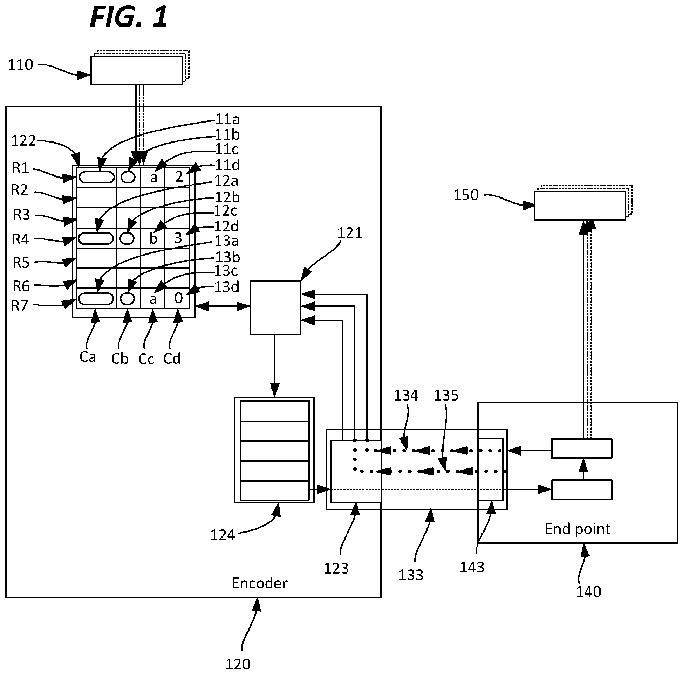

By way of example, the steps of this method will be described with respect to a schematic representation of a communications channel in accordance with an embodiment shown in figure 1.

Figure 1 represents a communications channel comprising an encoder and decoder in accordance with respective embodiments.

As shown in figure 1, there is provided an encoder 120 and an end point 140, in communication via a twisted pair Ethernet compatible Physical Layer 133. This may constitute a physical layer of any of the technologies mentioned above for example.

As shown, the Encoder 120 comprises a controller 121, a working memory 122 and transmission buffer 124 and an interface 123.

It will be appreciated that these functional components are schematic in nature, and that alternative configurations may be envisaged achieving the same functions.

In particular while for the sake of simplicity a simplex configuration with an encoder on one side and a decoder on the other, it will be appreciated that many embodiments will provide matching encoder functionality and decoder functionality in each device.

In accordance with embodiments, at a first step link parameter data is received at controller 121 from the physical layer interface 123.

Embodiments tightly coupled to the Ethernet PHY provide greater hardware efficiency by providing the framing and retry service functionality in hardware at the link layer and not as part of an Internet Protocol (IP) stack.

At a second step, user application data is received from one or more user applications 110. This data may be received by the controller 121 and written to working memory 122. For the sake of simplicity, Figure 1 shows the data being received directly in working memory 122. User application data may for example comprise data in a representation at the session layer, presentation layer, or application layer of the OSI model. This user application data is associated with a quality of service requirement. This requirement may define an average transmission rate, maximum latency, maximum error rate, or other technical definition of a required quality of service as may occur to the skilled person, or any combination of these.

At a third step, a frame reception status control token 134 is received at controller 121 from the end point 140. As shown, this control token is transmitted via the physical later 133 and interface 123.

At a fourth step, further control tokens 135 are received supporting out of channel communications between the encoder and the end point; as shown, these further control tokens are transmitted via the physical later 133 and interface 123.

It will be appreciated that these four steps do not need to be performed in any particular sequence, and may occur entirely asynchronously, or, may occur simultaneously.

As shown, working memory 122 comprises four parallel sets of addresses represented as columns Ca, Cb, Cc and Cd. Each address in set Ca contains an application specific data message received from one of the applications 110. The corresponding position in the second set Cb contains the associated control tokens, the third set Cc contains the associated quality of service requirements, and the fourth set Cd stores the current transmission priority of the message. Accordingly, for example data message 11a as shown in stored in cell Ca, R1, associated control tokens 11b are stored in cell Cb, R1, a Quality of Service definition "a" is stored in cell Cc, R1, and a current transmission priority "2" is stored in cell Cd, R1. Similarly, data message 12a as shown in stored in cell Ca, R4, associated control tokens 12b are stored in cell Cb, R4, a Quality of Service definition "b" is stored in cell Cc, R4, and a current transmission priority "3" is stored in cell Cd, R4. Similarly, data message 13a as shown in stored in cell Ca, R7, associated control tokens 13b are stored in cell Cb, R7, a Quality of Service definition "a" is stored in cell Cc, R7, and a current transmission priority "0" is stored in cell Cd, R7. For the sake of the present example, a priority of 0 may be considered to represent that the message has already been transmitted, with no re-transmission scheduled, and a priority of 3 indicating that the message is scheduled for transmission at the next opportunity. Similarly, a QOS of "a" may represent a high required quality, and a QOS of "b" a slightly lower requirement. Once the link parameter data and frame reception status is available, the controller may assess the link parameter data with the frame reception status to prioritize elements of the user data.

The skilled person will recognize that this representation is merely schematic, and that any suitable data structure may be used. In particular, any classification or representation of priority and/or quality of service may be used as applicable to a particular context.

The frame reception status control token may indicate that a particular element has not been correctly received by the end point, in which case the assessment performed by the controller may comprise prioritizing the particular element over other elements of the user application data. On this basis, if a frame reception status control token received from the endpoint indicates that a previous frame incorporating (for example) message 13a has been lost or corrupted (while as noted above, its current priority of "0", confirms that the message has already been transmitted), the controller 121 may, in accordance with embodiments, prioritize message 13a for retransmission, e.g. by setting the priory value 13d to 3, or some other value as may be dictated by a balancing of all of the other priority constraints to which the messages in working memory 122 are subject, together with the available link parameter data, so as to achieve as closely as possible the QOS requirements of all messages. Generally, embodiments ensure that the desired QoS can be supported at the MAC level. The exact operation of this function will be dictated by the QoS provision required by the application. For example, if a time-slot based QoS is used then the assessment by the controller may be forbidden to re-send frames in an invalid time-slot. In this example the priority may be raised when a valid time slot is encountered. On the other hand, a priority-driven QoS provision may allow frames to be retried in any time-slot if the original priority of the frame is high enough. The necessary structure of working memory 122 allows the priority selection algorithm to be modified for specific implementations.

Similarly, if a frame reception status control token received from the endpoint indicates that a previous frame incorporating (for example) message 13a has been received with a delay not consistent with a latency requirement defined by the quality of service "a" specified in 13c, the controller 121 may, in accordance with embodiments, prioritize messages for the same application, or at the same endpoint, 12a for transmission at a higher priority, e.g. if message 11a is intended for the same endpoint application 150 as message 13d, the priory value 11d may be upgraded from 2 to 3, or some other value as may be dictated by a balancing of all of the other priority constraints to which the messages in working memory 122 are subject, together with the available link parameter data, so as to achieve as closely as possible the QOS requirements of all messages. Such a delay may be caused by the link entering a standby or reset mode before or during the transmission of the delayed frame.

Similarly, a QoS provision may updated during use to mask a faulty device or a change of operation at the application level (e.g. take-off vs cruise mode for an aircraft).

The priority adjustment mechanism may allow the controller to override the default QoS assignment of an application to restrict faulty devices from flooding the network with traffic or to respond to changes the nature of operation of the application. For example, a mode change in the application may mean that the QoS provisioning needs to change (an input that was originally high priority or high-bandwidth may be degraded to low priority or low bandwidth if the input is no longer required). On update of the QoS assignment, the controller can remove frames from disabled channels and adjust the priority of frames that are waiting to be sent appropriately. This adds resilience to the link when used as part of a network and ensures that use of available bandwidth can be maximised.

When priorities are adjusted as described above, this may equally involve adjusting the priorities of other messages besides those directly concerned by a received frame reception status control token, for example by downgrading the priority of less urgent messages to allow for the upgrading of messages directly concerned by a received frame reception status control token.

On the basis of the prioritization performed as described above, the controller translates user application data form the working memory into a format compliant with the Physical Layer on the basis of the prioritisations e.g. as stored in column Cd. Depending on the Physical layer characteristics and the characteristics of the data messages e.g. as stored in column Ca, this may typically involve the combination of multiple messages, or multiple parts of messages, in a single frame. Depending on channel constraints, e.g. as reported in link parameter data, this may involve combining messages with different priorities in a single frame, for example if channel conditions are sufficiently good that all of the currently most urgent (highest priority) messages can be packed in the next frame for transmission, and still have space for lower priority messages. In other words, messages are compiled into the frame format specified by the applicable physical layer.

Accordingly, this operation may comprise segmenting the user application data into sub-packets; forming a frame structure compliant with the Physical Layer comprising one or more sub-packets and the quality data.

The framing service provided by the translation operation may encode user data with a defined frame format that allows these features to be supported. It also has its own set of dedicated control frames that it uses to coordinate the framing layer between the near and far endpoints of the link. This includes control frames for managing power delivery capability across the link by providing both power delivery advertisement and control.

The translation may for example implement the SpaceWire or SpaceFibre data packet format, data broadcast and Quality of Service (QoS) mechanisms.

In particular, translation according to embodiments may be compliant with clauses 5.7.1 - 5.7.5 of the SpaceFibre data link layer, providing compatibility with SpaceWire/SpaceFibre networks and supporting Quality of Service (QoS) mechanisms of SpaceFibre.

As such, there may be provided a Packet Framing operation that takes user data and Quality of Service metadata from the application. This user information may be wrapped in a frame that includes the information needed for transmission over the PHY. At the far end, the received frame may be decoded and user data and relevant metadata extracted as discussed further below. The frame data may be checked for errors and a retry is requested if the frame was corrupted during transmission. The Packet Framing service and the QoS metadata inputs may support a range of options (frame size, CRC used, custom metadata fields) that allow tailoring of the framing service to match a particular communication protocol profile.

Once translated, the controller may write the translated user application data together with associated control tokens to the buffer 124. In so far as Buffer 124 is a FIFO buffer, frames will be read out in the same sequence as they are written in. Since the frames are translated from the messages on the basis of their priority at the time of translation, the sequence of Frames in the buffer constitutes a programmed transmission sequence reflecting the prioritisation of the messages. Alternatively, Frames may be associated with an explicit indicator of the required transmission sequence.

Once a frame comprising a particular message is translated, or written to the buffer, or transmitted, or at some other convenient juncture, the priority value of that message e.g. as stored in column Cd may be updated (set to zero in the case of the exemplary prioritisation scheme adopted for the sake of the present example).

The translated data frames and control tokens are then retrieved from buffer 124 and for transmission in the programmed transmission sequence.

It will be appreciated that while figure 1 shows only a single end point, in certain variants a single encoder may be in communication with multiple end points. Such a variant may comprise a single working memory and controller, in communication with a respective output buffer and Physical layer interface for each end point.

Similarly, a single end point may implement multiple communications channels.

In accordance with certain variants, certain control tokens may reflect current operational status, for example in terms of an indication that a connection with the end point is active, an indication that a connection with the end point is inactive, an indication that a connection with the end point is in a standby condition, or an indication of an error rate or error rate category to which a connection with the end point is active subject. In each case, the control token may be taken into account by the controller in setting priorities as discussed above. In particular, messages intended for an endpoint that is inactive or in a standby position might be deprioritised, while messages having a high Quality of Service requirement intended for an end point with a poor error rate or error rate category may receive a higher priority on the basis that a need for retransmission is likely.

As discussed above, messages may be stored in the working memory 122 after they have been translated into a frame for transmission, and indeed after the frame has been transmitted. In a case where received frame reception status control token indicates that a particular element has been correctly received by the end point, the controller may delete the correctly received element from the working memory 122.

As such, there may be provided a Frame Buffering and Retry Mechanism which stores a copy of outgoing frames as they are queued for transmission. Each packet to be sent is kept in a retry buffer until the far end indicates the packet has been received correctly. In the case of a link disconnect or degraded throughput due to high bit-error rates the retry buffer will manage the packet transmission order to meet QoS requirements.

In accordance with certain variants, the retrieval of data and control tokens, and resulting translation may comprise calculating a frame Cyclic Redundancy Check (CRC) or other hash function or error checking code may be determined and added to the transmitted data frame.

As such, a Frame Arbitrator may manage access to the PHY between data frames and control frames. As frames are loaded into the PHY, the arbitrator calculates the frame CRC and sends the CRC value when the end of frame marker is encountered.

As such, there may be provided a Control Frame Handler that generates control frames that are required for the operation of the link. This is allows the by the framing service of both ends of the link to share acknowledgement and performance information. This handler may also provide power delivery negotiation and/or management between the two endpoints.

One function that may be implemented by an exchange of control tokens in accordance with certain embodiments is a negotiation of a power supply from the Encoder to the End Point, over the conductors of the physical layer. Power in the other direction will be handled by a second encoder/decoder pair (each side of the link consists of an encoder and a decoder). So a prospective power offer from the decoder side will be offered by the encoder local to that decoder.

The magnetically coupled data lines allow power to also be provided over the same wiring. The power supply can be optimised for the target application beyond the constraints of typical *Power-over-Ethernet* technology. The PHYs may report if the far end needs powering, features of the Link Management layer may provide power handshaking to ensure the correct amount of power is provided to the remote end. The link management layer also interfaces with the power supply at the source end of the link to enable and control the power delivery over the link.

As such, in accordance with certain variants, control tokens received from an end point may define a power request from the end point.

Similarly, in accordance with certain variants, control tokens sent from the encoder 120 to an end point 140 may define a power offer from the encoder to the end point.

In the context of a negotiation between the Encoder and an end point, a series of exchanges of such control tokens may be envisaged, whereby the Encoder and End point converge on a Power solution satisfying the End point's power requirements (possibly in sub-optimal power constrained configuration), and compatible with the Encoder's power management budget (possibly on the basis of some prioritisation or arbitration between multiple end points or other power sinks.) As a result of this process, the controller may initiate the provision of electrical power over the Physical layer interface 123 and cabling 133 (bearing in mind that the Ethernet cabling may be used for power delivery) to the end point.

It will be appreciated that the different variants discussed above with reference to figure 1 may be combined as required. For example, an embodiment may include power negotiation, but not error checking, or vice versa, or both, or neither.

Access to the configuration, status and data interfaces of the Ethernet PHY is via standard Ethernet PHY interfaces such as MDIO for the control and status interface of the PHY and GMII/RGMII/SGMII for the data interface.

The Ethernet PHY establishes and maintains the link and reports the current running status via its status interface. The nature of this interface will vary between PHYs and may consist of discrete signals or require register access via the MDIO interface. The controller 121 manages these accesses appropriately and uses the collected information to report relevant link status information to the framing layer.

The controller 121 can also use the management interface to the PHY to support advanced PHY features such as Precision Time Protocol time synchronisation, Energy Efficient Ethernet link management and Link failure prediction and detection mechanisms (including SEFI detection and handling). By supporting these features at the framing layer, instead of higher in the stack, the controller can incorporate and control these features as part of the Quality of Service provision and ensure that frame delivery guarantees are met. For example, it may hold off a request to standby the link if it is known that an active QoS timeslot is about to be entered or if high priority data is queued to be sent, as indicated by the user QoS interface.

According to embodiments IEEE-1588 Precision Time Protocol timestamping may be provided at the PHY interface to enable high-precision synchronisation of local oscillators across the network. The Start-of-Frame (SoF) indication from the PHY may be recorded with a timestamp by both the encoder and decoder through use of a Start-of-Frame control token messages used for time synchronisation. Discrete signals or the MDIO interface may be used to notify the controller 121 the detection of a SoF token at the encoder or decoder interfaces. This information may then be passed to the user application layer for integration into a PTP service

Certain embodiments allow power delivery, SpaceWire/SpaceFibre data packets and time synchronisation to be supported over a single Ethernet cable of lengths up to 100m. This will result in significant mass saving over existing interface solutions and will allow new application domains for SpaceWire/SpaceFibre networks as well as offering a robust and more capable replacement in most existing SpaceWire applications.

As discussed above, the implementation shown in figure 1 is schematic, and may be implemented in many ways. In particular the various functional elements described above may be merged, or defined in terms of an alternative functional separation. For example, the controller may comprise a conventional computer device, or a suitably programmes FPGA or other PLD, or an ASIC, which may comprise dedicated memory, which may functionally constitute the working memory 122 and or transmission buffer 124. The Physical layer interface may comprise a PHY chip, or may be fully integrated in a PLD or ASIC implementation, or partially integrated for example as part of a System on Chip implementation.

Embodiments may be implemented as an IP core in either FPGA or ASIC and would interface with a radiation tolerant/hard Gigabit Ethernet PHY. SpaceWire cabling could be used to carry the Ethernet pairs.

Third protocol routers (such as SpaceFibre routers) may have one or more magnetically isolated links to provide access between the link and a third protocol network.

As such, there may be provided an encoder for encoding data on a twisted pair Ethernet compatible Physical Layer, comprising an output buffer for transmission to an end point. The encoder may be adapted to receive link parameter data from the physical layer, receive user application data from one or more user applications; receive frame reception status data from the end point; and receive control tokens supporting out of channel communications between the encoder and the end point.

User application data may be associated with a quality of service requirement.

The encoder may be further adapted to assess the link parameter data with the frame reception status to prioritize elements of the user data, translate the user application data into a format compliant with the Physical Layer, write the translated user application data to the buffer reflecting the prioritization, and write the control tokens together with associated control tokens to the buffer reflecting current operational status, and to retrieve data and control tokens from the buffer for transmission in order of priority.

It will be appreciated that while figure 1 presents an Encoder in accordance with certain embodiments, other embodiments may be defined in terms of the characteristic operations described above constituting a process.

It will be appreciated that the various operations described above with regard to the Encoder may be mirrored by corresponding operations on the part of the Decoder, so that the encoder and decoder constitute a plurality of interrelated products.

As shown in figure 1, there is further provided a decoder for decoding data at an end point received over a twisted pair Ethernet compatible Physical Layer from an encoding network interface. In accordance with embodiments, the encoder is adapted to receive a data frame on the physical layer, extract user application data and associated control tokens from the data frame, and decode user quality of service information encoded within the data frame.

The decoder may furthermore decode control tokens and change a mode of operation of the decoder reactive to a control token or transfer the control token to a respective application,

The decoder may furthermore calculate a CRC code of the data frame; and create a control token reporting frame reception status based on the CRC code and transmit the reception status control token to the encoder.

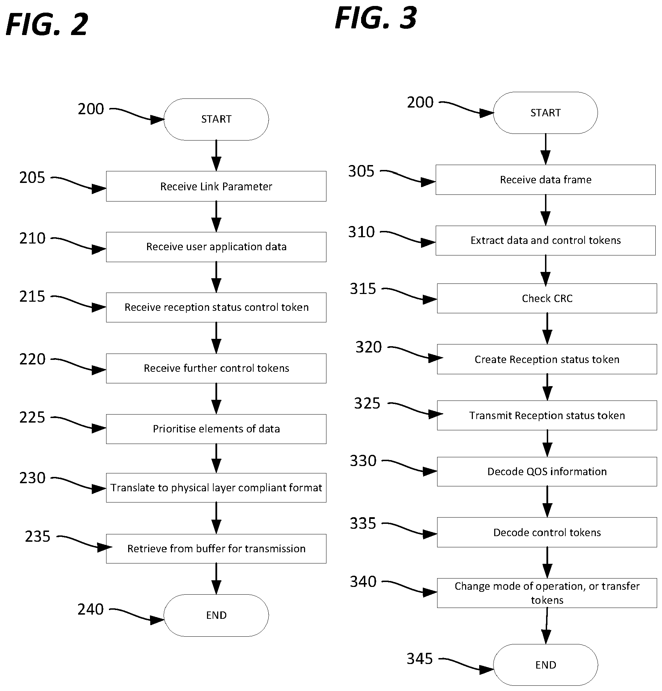

On this basis, it will be understood that the operation of the decoder in receiving a reception status control token, and prioritising messages for translation on this basis may be influenced by the determination of the reception status control token at the decoder, and the operation of the decoder may be influenced by the generation of control tokens, such as QOS and CRC values at the Encoder, as discussed further with reference to figure 3 below.

Figure 2 shows a process in accordance with certain embodiments.

More particularly, figure 2 shows a method for encoding data at an encoder on a twisted pair Ethernet compatible Physical Layer via an interface comprising an output buffer for transmission to an end point, for example as described generally with reference to figure 1.

As shown in figure 2, the method starts at step 200 before proceeding to step 205 at which link parameter data is received from the physical layer. The method then proceeds to step 210 at which user application data associated with a quality of service requirement is received from one or more user applications. The method then proceeds to step 215 at which a frame reception status control token may be received from the end point. The method then proceeds to step 220 at which further control tokens supporting out of channel communications between the encoder and the end point may be received. As discussed above, steps 205, 210, 215 and 220 may be performed in any sequence, concurrently, or otherwise.

The method then proceeds to step 225 at which the link parameter data is assessed with the frame reception status to prioritize elements of the user data, for example as discussed above with reference to figure 1.

The method then proceeds to step 230 at which the user application data is translated into transmission frames compliant with the Physical Layer on the basis of the prioritization determined at step 225. The method then proceeds to step 230 of writing the translated user application data together with associated control tokens to the buffer with a programmed transmission sequence reflecting the prioritisation. The method then proceeds to step 235 at which the data and control tokens are retrieved from the buffer for transmission in order of the programmed transmission sequence, before terminating at step 240.

It will be appreciated that implementations of this method will typically loop on certain operations, in many cases independently of progress at other stages of the method. For example, operations need not terminate after step 235, and the compilation of frames for transmission may proceed continuously so long as user data is available for transmission, and/or space is available in the transmission buffer, and the retrieval and transmission of frames for transmission may proceed continuously with the availability of data in the transmission buffer, and the capacity of the physical layer interface to receive new frames.

Figure 3 shows a process in accordance with certain embodiments.

More particularly, figure 3 shows a method for decoding data at an end point received over a twisted pair Ethernet compatible Physical Layer from an encoding network interface, for example as described generally with reference to figure 1.

As shown in figure 3, the method starts at step 300 before proceeding to step 305 at which a data frame is received on the physical layer. The method then proceeds to step 310 at which user application data and associated control tokens are extracted from the data frame. The method then proceeds to step 315 of calculating and checking the CRC code of the data frame, and then to step 320 of creating a control token reporting frame reception status based on the CRC check, and then transmitting the reception status control token to the encoder at step 325. The method may then proceed to step 330 at which user quality of service information encoded within the data frame is decoded. The method then proceeds to step 335 at which control tokens encoded within the data frame are decoded. The method then proceeds to step 340 at which a mode of operation of the decoder is performed reactive to a control token, or transferring the control token to a respective application. The change of mode of operation may for example comprise shutting the link down to save power, resetting the link to clear an error condition or changing a power delivery setting.

The method then terminates at step 345.

It will be appreciated that implementations of this method will typically loop on certain operations, in many cases independently of progress at other stages of the method. For example, operations need not terminate after step 345. It will be appreciated that the same steps may be performed in alternative sequences without affecting the overall effect, for example the creation of the reception status token may be performed at any time after the CRC check, and the transmission of the reception status token may be performed at any time after its generation. Optimally the operations of decoding or act on control tokens will not be performed until the CRC is confirmed to be correct.

In correspondence to optional embodiments described with reference to figures 1 and 2 above, the method may comprise an additional step of responding to a power request or power offer using the control tokens.

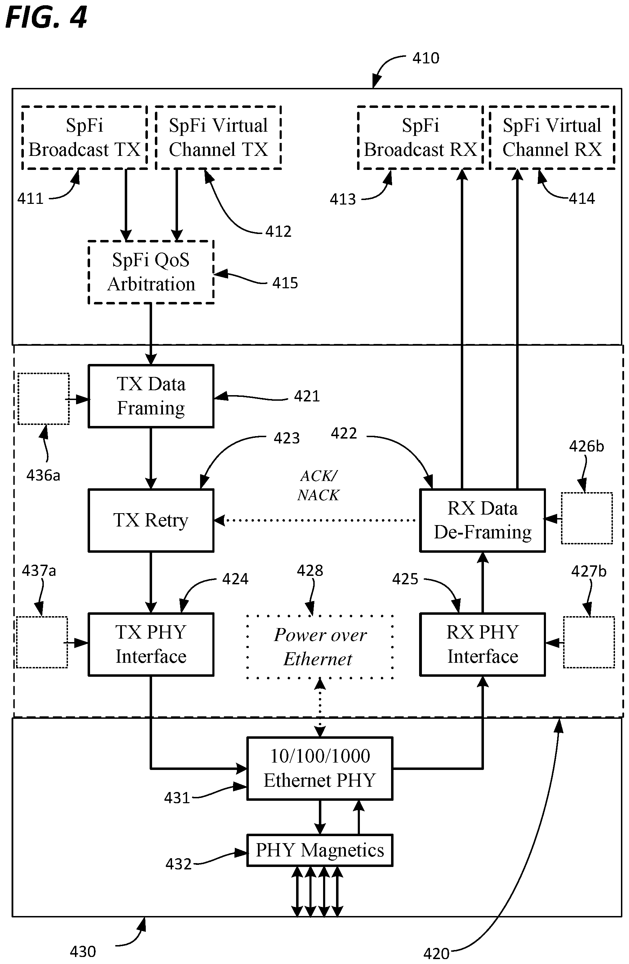

Figure 4 shows a functional representation of a complete codec in accordance with an embodiment.

As shown in figure 4 there is provided an example of an embodiment being used in a user application to carry SpaceFibre traffic with a user-provided SpaceFibre QoS provision.

As shown, element 410 comprises a SpaceFibre compliant (e.g. ECSS-E-ST-50-11C) Virtual Channel interface Comprising Broadcast transmission channel 411 and point to point transmission channel 412, and correspondingly Broadcast reception channel 413 and point to point reception channel 414, with the transmission channels 411 and 412 being provided with Quality of Service management functionality via an arbitrator 415.

Element 420 provides framing layer 421 on the transmission side implementing the translation operation described with reference to element 121 above and corresponding deframing operation 422 on the receiver side (in particular extracting CRC, acknowledgement or other control tokens from received data, as may be required for prioritisation operations as discussed above. Element 420 further incorporates retry functionality 423 as discussed above as an example of reprioritisation of data, and outgoing PHY interface 424 and incoming PHY interface 425, together corresponding to element 123 as described above.

The incoming and outgoing data is transmitted via Ethernet 1000BASE-T PHY channel 430, comprising data interface 431 and Magnetics interface 432.

In certain variants, User defined additional framing on the outgoing channel may be provided by element 436a and/or corresponding de framing on the incoming channel may be provided by element 426b for compliance to other standards such as IEEE 802.3 as shown.

In certain variants, functions may be provided, to support advanced feature of the PHY, such as PTP timestamping (e.g. in accordance with IEEE 1588) via SoF detect on transmit for example as represented by elements 437a for outgoing data and 427b for in incoming data, in support of Quality of Service determination functions or otherwise as discussed above.

In certain variants, functions may be provided, for example as represented by element 428 to support power delivery over the PHY magnetics

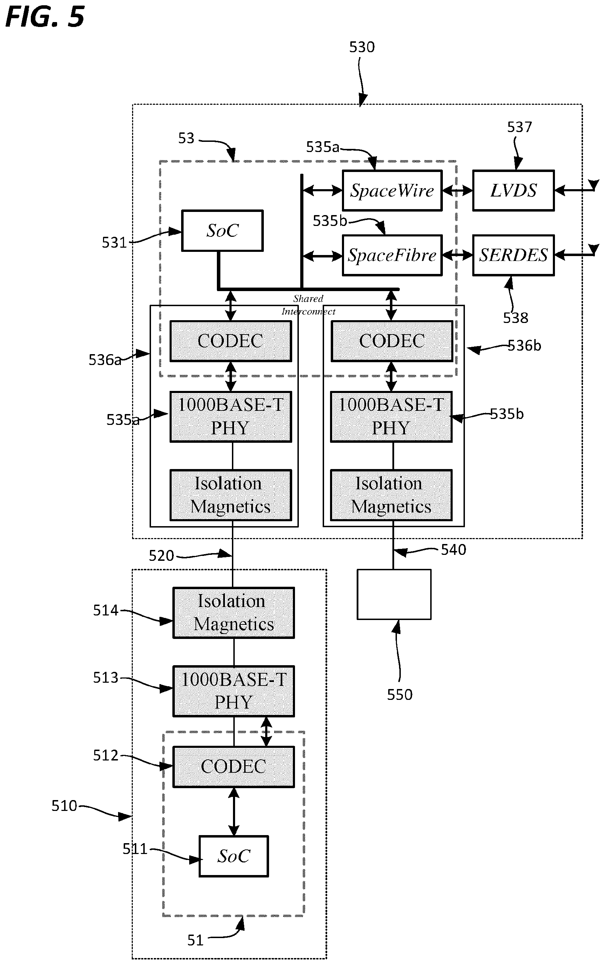

Figure 5 shows a functional representation of a complete codec in accordance with an embodiment.

As shown in figure 5 there is provided an example of an embodiment being used in a spacecraft avionics application, showing interoperability with third interfaces (SpaceFibre and SpaceWire).

As shown, element 510 is a User hardware comprising for example a user application executing on a System on Chip 511 and codec module 512 implementing for example functionality of elements 121, 122, 124,and/or 140 as discussed above, a data Physical interface 513, implementing 1000Base-T or any other protocol as discussed in the preceding embodiments, and a magnetically isolated interface 514, as discussed herein, configured for a SpaceFibre user application. As shown, the implementations of the functionality of elements 121, 122, 124 as described above for each of the implementations in device 510 may be performed by a dedicated FPGA or ASIC 51.

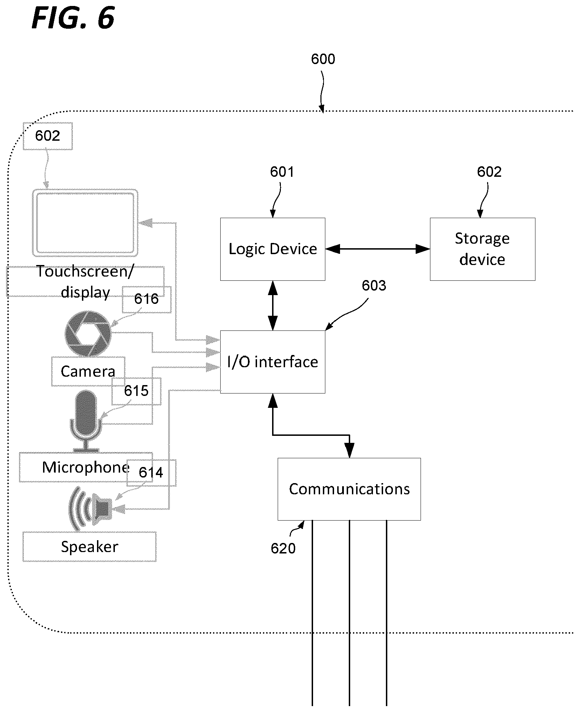

The SoC may be part of the user application and may send data to/from the CODEC. This may typically be a processor with some other functions such as graphics processing connected on a single chip. Similar to the arrangement of Fig 6 but all elements present in a single chip.

Data is carried over SpaceWire cable 520 between the PHYs 513/514 and 535a, 535b that the encoder and decoder of the embodiment is connected to.

530 as shown is a device supporting SpaceWire, SpaceFibre and two magnetically isolated interfaces, one used for an EGSE access bridge to the SpaceWire/SpaceFibre network. In particular, User hardware 530 may as shown consist of: a SoC 531, similar in functionality to SoC 511 as described above, a standard SpaceWire interface 535a supporting LVDS (Low voltage, differential signalling) communications interface 537, a standard SpaceFibre interface 535b supporting SERDES (Serialiser/Deserialiser) communication interface 538, a first SpaceFibre interface carried over a channel in accordance with an embodiment 536a, and a second SpaceFibre interface carried over the invention 536b with IEEE 802.3 framing enabled to allow connection to Ethernet networking equipment 550 such as an EGSE (Electrical Ground Support Equipment) Laptop/PC with Gigabit Ethernet port, for EGSE purposes e.g. via standard CAT5/6 Ethernet cable 540. An off-the-shelf laptop/PC may be provided, with a standard Ethernet interface running software required to perform the decoder and encoder functions e.g. as described with respect to elements 121, 122, 124 and/or 140 of embodiments as described herein. As shown, the standard SpaceWire and Space Fibre interfaces, as well as the implementations of the functionality of elements 121, 122, 124 as described above for each of the implementations in device 530 may be performed by a dedicated FPGA or ASIC 53. The addition of IEEE 802.3 frames in 536b allows this compatibility to be supported (with a degradation of the deterministic aspects of the implementation). As such, device 530 may operate to convert communications according to various protocols, including one or more protocols in accordance with, possibly different, embodiments as described herein. It will be appreciated that various embodiments may support alternative combinations of protocol and that any number of protocols may be supported depending on the requirements of the different systems to be connected thereto.

In accordance with the foregoing, there is provided a communications link suitable in particular for spacecraft, and in particular for On-board communication networks between sub-assemblies of a spacecraft and supporting EGSE. Embodiment are also suitable for resource constrained terrestrial systems with high data-rate and real-time requirements such as robotics. Embodiments provide
1) a very high level of DC and AC common mode electrical isolation
2) compatibility with the SpaceWire standard at the packet level
3) a similar level of QoS and FDIR capability to SpaceFibre.

The high level of electrical isolation provided by this communications link is also of significant benefit when testing sub-assemblies and the spacecraft using Electrical Ground Support Equipment (EGSE).

Embodiments can be particularly beneficial in providing a reduction in size and mass of the spacecraft or other implementation context by being able to supply power and data to remote devices using the same cable.

In particular, there may be provided, a codec for transmission of data over a twisted pair Ethernet compatible Physical Layer is provided in which sub-packets intended for transmission are buffered for transmission in a sequence based on a priority determined based on quality of service requirements associated with each subpacket, where the priority is updated at the encoder based on control tokens returned by the end point. These control tokens may provide CRC information, acknowledgement signals, and the like, generated by the end point decoder. This may allow for improved compliance with quality criteria by reprioritising underperforming communication channels, resending lost packets.

In view for example of the preceding discussion, it will be appreciated that embodiments may be implemented in software. Software embodiments include but are not limited to applications, firmware, resident software, microcode, etc. The invention can take the form of a computer program product accessible from a computer-usable or computer-readable medium providing program code for use by or in connection with a computer or an instruction execution system.

A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.

In some embodiments, the methods and processes described herein may be implemented in whole or part by a user device. These methods and processes may be implemented by computer-application programs or services, an application-programming interface (API), a library, and/or other computer-program product, or any combination of such entities.

The user device may be a mobile device such as a smart phone or tablet, a drone, a computer or any other device with processing capability, such as a robot or other connected device, including loT (Internet of Things) devices.

Figure 6 shows a generic computing system suitable for implementation of embodiments of the invention.

A shown in figure 6, a system includes a logic device 601 and a storage device 602, input/output subsystem 603, which may optionally interface with devices such as display 602, camera 616, microphone 615, speaker 614, or other interface devices as are well known to the skilled person, and communication subsystem 620. The system may optionally include a display subsystem 602, and/or other components not shown.

Logic device 601 includes one or more physical devices configured to execute instructions. For example, the logic device 601 may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic device 601 may include one or more processors configured to execute software instructions. Additionally or alternatively, the logic device may include one or more hardware or firmware logic devices configured to execute hardware or firmware instructions. Processors of the logic device may be single-core or multi-core, and the instructions executed thereon may be configured for sequential, parallel, and/or distributed processing. Individual components of the logic device 601 optionally may be distributed among two or more separate devices, which may be remotely located and/or configured for coordinated processing. Aspects of the logic device 601 may be virtualized and executed by remotely accessible, networked computing devices configured in a cloud-computing configuration.

Storage device 602 includes one or more physical devices configured to hold instructions executable by the logic device to implement the methods and processes described herein. When such methods and processes are implemented, the state of storage device 602 may be transformed-e.g., to hold different data.

Storage device 602 may include removable and/or built-in devices. Storage device may be locally or remotely stored (in a cloud for instance). Storage device 602 may comprise one or more types of storage device including optical memory (e.g., CD, DVD, HD-DVD, Blu-Ray Disc, etc.), semiconductor memory (e.g., FLASH, RAM, EPROM, EEPROM, etc.), and/or magnetic memory (e.g., hard-disk drive, floppy-disk drive, tape drive, MRAM, etc.), among others. Storage device may include volatile, non-volatile, dynamic, static, read/write, read-only, random-access, sequential-access, location-addressable, file-addressable, and/or content-addressable devices.

In certain arrangements, the system may comprise an interface 603 adapted to support communications between the logic device 601 and further system components.

Aspects of logic device 601 and storage device 602 may be integrated together into one or more hardware-logic components. Such hardware-logic components may include field-programmable gate arrays (FPGAs), program- and application-specific integrated circuits (PASIC/ASICs), program- and application-specific standard products (PSSP/ASSPs), system-on-a-chip (SOC), and complex programmable logic devices (CPLDs), for example.

The term "program" may be used to describe an aspect of computing system implemented to perform a particular function. In some cases, a program may be instantiated via logic device executing machine-readable instructions held by storage device 602. It will be understood that different modules may be instantiated from the same application, service, code block, object, library, routine, API, function, etc. Likewise, the same program may be instantiated by different applications, services, code blocks, objects, routines, APIs, functions, etc. The term "program" may encompass individual or groups of executable files, data files, libraries, drivers, scripts, database records, etc.

In particular, the system of figure 6 may be used to implement embodiments of the invention.

For example a program implementing the steps described with respect to figure 2 and or 3, or the algorithms presented above may be stored in storage device 502 and executed by logic device 601. The functions of any or all of the units described with respect to figures 1, 4 or 5 may similarly be implemented by one or more program performing the required functions, in communication with additional dedicated hardware units (for example one or more PHY chips as discussed above) as necessary. Accordingly the invention may be embodied in the form of a computer program.

When included, communication subsystem 620 may be configured to communicatively couple computing system with one or more other computing devices. For example, communication module of communicatively couple computing device to remote service hosted for example on a remote server. Communication subsystem may include wired and/or wireless communication devices compatible with one or more different communication protocols. As non-limiting examples, the communication subsystem may be configured for communication via a wireless telephone network, or a wired or wireless local- or wide-area network. In particular, the communications subsystem may comprise components implementing some or all of the features describes above with respect to figures 1 to 5. For example, applications 110 or 150 may be executed by logic device 601, and access external elements via embodiments as discussed above wholly or partially implemented by such components of the communication subsystem 620.

The system of figure 6 is intended to reflect a broad range of different types of information handling system. It will be appreciated that many of the subsystems and features described with respect to figure 6 are not required for implementation of the invention, but are included to reflect possible systems in accordance with the present invention. It will be appreciated that system architectures vary widely, and the relationship between the different sub-systems of figure 6 is merely schematic, and is likely to vary in terms of layout and the distribution of roles in systems. It will be appreciated that, in practice, systems are likely to incorporate different subsets of the various features and subsystems described with respect to figure 5.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

The examples described above are given as non-limitative illustrations of embodiments of the invention. They do not in any way limit the scope of the invention which is defined by the following claims.

## Claims

1. A method for encoding data at an encoder on a twisted pair Ethernet compatible Physical Layer via an interface comprising an output buffer for transmission to an end point, said method comprising:
receiving link parameter data from the physical layer;
receiving user application data from one or more user applications;
receiving a frame reception status control token from said end point;
receiving further control tokens supporting out of channel communications between said encoder and said end point;
said user application data being associated with a quality of service
requirement;
said method further comprising:
assessing said link parameter data with said frame reception status to prioritize elements of said user data,
translating said user application data into transmission frames compliant with said Physical Layer on the basis of said prioritization,
writing said translated user application data together with associated said control tokens to said buffer with a programmed transmission sequence reflecting said prioritisation, and
retrieving data and control tokens from said buffer for transmission in order of said programmed transmission sequence.

2. The method of claim 1, wherein said control tokens reflecting current operational status indicate one or more of an indication that a connection with said end point is active, an indication that a connection with said end point is inactive, an indication that a connection with said end point is in a standby condition, or an indication of an error rate or error rate category to which a connection with said end point is active subject.

3. The method of claim 1 or 2, said step of translating comprising
segmenting said user application data into sub-packets;
defining quality data encoding said quality of service requirements;
forming a frame structure compliant with said Physical Layer comprising one or more said sub-packets and said quality data.

4. The method of any preceding claim wherein said frame reception status control token indicates that a particular said element has not been correctly received by said end point, said step of assessing comprising prioritizing said particular element over other said elements of said user application data.

5. The method of any preceding claim wherein said frame reception status control token indicates that a particular said element has been correctly received by said end point, said method comprising a further step of deleting a said correctly received element from memory.

6. The method of any preceding claim the method wherein one or more said control tokens define a power request or a power offer.

7. The method of any preceding claim wherein said step of translating said user application data may comprise calculating the frame CRC and adding the CRC value at the end of the transmitted data frame.

8. A encoder for encoding data on a twisted pair Ethernet compatible Physical Layer, said encoder comprising an output buffer for transmission to an end point, said encoder being adapted to
receive link parameter data from the physical layer;
receive user application data from one or more user applications;
receive frame reception status data from said end point;
receive control tokens supporting out of channel communications between said encoder and said end point;
said user application data being associated with a quality of service requirement;
said encoder being further adapted to
assess said link parameter data with said frame reception status to prioritize elements of said user data,
translate said user application data into a format compliant with said Physical Layer,
write said translated user application data to said buffer reflecting said prioritization,
write said control tokens together with associated said control tokens to said buffer reflecting current operational status, and to
retrieve data and control tokens from said buffer for transmission in order of priority.

9. A method for decoding data at an end point received over a twisted pair Ethernet compatible Physical Layer from an encoding network interface, said method comprising:
receiving a data frame on said physical layer,
extracting user application data and associated control tokens from said data frame,
decoding user quality of service information encoded within said data frame,
decoding said control tokens and changing a mode of operation of said decoder reactive to a said control token or transferring said control token to a respective application,
calculating and checking CRC code of said data frame, and
creating a control token reporting frame reception status based on said CRC check to and transmitting said reception status control token to said encoder.

10. the method of claim 9 comprising the further step of
responding to a power request or power offer using said control tokens.

11. A decoder for decoding data at an end point received over a twisted pair Ethernet compatible Physical Layer from an encoding network interface, said encoder being adapted to:
receive a data frame on said physical layer,
extract user application data and associated control tokens from said data frame,
decode user quality of service information encoded within said data frame,
decode said control tokens and change a mode of operation of said decoder reactive to a said control token or transfer said control token to a respective application,
calculate a CRC code of said data frame; and
create a control token reporting frame reception status based on said CRC code and
transmit said reception status control token to said encoder.

12. A computer program comprising instructions which, when the program is executed by a computer, cause the computer to carry out the method of any of claims 1 to 7, or 9 or 10.

13. A computer-readable medium comprising instructions which, when executed by a computer, cause the computer to carry out the method of any of claims 1 to 7, or 9 or 10.
